# EUROPÄISCHE PATENTSCHRIFT

(11) **EP 3 249 080 B1**
(45) Veröffentlichungstag und Bekanntmachung des Hinweises auf die Patenterteilung: **02.01.2019**
(21) Anmeldenummer: 17171762.2
(22) Anmeldetag: 18.05.2017
(51) Int. Cl.: C25B 9/00, C25B 1/18, C02F 1/463

(54) **ELEKTROLYTISCHER REAKTOR UMFASSEND EINE KATHODE UND EINE ANODE**
ELECTROLYTIC REACTOR COMPRISING A CATHODE AND AN ANODE
RÉACTEUR ÉLECTROLYTIQUE COMPRENANT UNE CATHODE ET UNE ANODE

(30) Priorität: 27.05.2016 DE 102016109824
(43) Veröffentlichungstag der Anmeldung: 29.11.2017
(73) Patentinhaber: Fraunhofer-Gesellschaft zur Förderung der angewandten Forschung e.V., 80686 München (DE)
(72) Erfinder: EGNER, Siegfried, 74740 Adelsheim (DE); MARIAKAKIS, Iosif, 70197 Stuttgart (DE); CLAUSSNITZER, Uwe, 70569 Stuttgart (DE)
(74) Vertreter: DREISS Patentanwälte PartG mbB

(56) Entgegenhaltungen:
- EP-A1- 0 408 984
- US-A- 4 732 661
- US-A1- 2010 116 650

## Beschreibung

In der Verfahrenstechnik werden häufig elektrolytische Reaktoren eingesetzt, die eine Kathode und eine Anode aufweisen. Bei Betrieb des Reaktors wird eine elektrische Spannung zwischen Kathode und Anode angelegt, so dass sich die Anode verzehrt (Opferanode).
In der DE 10 2010 050 691 B3 und der DE 10 2010 050 692 B3 werden ein Verfahren und ein Reaktor zur Rückgewinnung von Phosphatsalzen aus einer Flüssigkeit beschrieben, wobei die Opferelektroden aus einem magnesiumhaltigen Material bestehen.
Der Erfindung liegt die Aufgabe zugrunde, einen elektrolytischen Reaktor bereitzustellen, insbesondere zum Abtrennen von Phosphat aus phosphathaltigen Flüssigkeiten und Rückgewinnung von Phosphatsalzen, umfassend ein Gehäuse, einen Zulauf sowie einen Ablauf für die Flüssigkeit und zwei Elektroden unterschiedlicher Polarität, die zwischen sich einen Reaktionsraum einschließen, wobei wenigstens eine der beiden Elektroden eine Opferelektrode ist.

Dabei stellt sich bei derartigen Reaktoren immer der Wunsch nach der optimalen Umsetzung und Reaktion, wobei die optimale Umsetzungsrate durch eine möglichst konstante Strömungsführung im Reaktor erreicht werden kann. Es ist daher Aufgabe der Erfindung, einen Reaktor bereitzustellen, der eine möglichst konstante Strömung über den gesamten Reaktor aufweist.

Die Aufgabe wird durch einen Reaktor der eingangs genannten Art gelöst, bei dem zwischen Zulauf und Reaktionsraum eine Vorkammer angeordnet ist, in der Einbauten derart angeordnet sind, dass der Zulaufstrom durch die Einbauten in zwei Teilströme aufgeteilt und um die Einbauten herumgelenkt wird. Dabei ist es besonders bevorzugt, wenn zu jedem Punkt im Querschnitt des Zulaufprofils im Zielquerschnitt, nämlich dem Eingangsquerschnitt des Reaktionsraums, ein korrespondierender Punkt definiert werden kann, wobei als Verbindung der Punkte ein Teilströmungspfad definiert werden kann, und die Summe an Strömungswiderständen je Teilströmungspfad gleich ist. Hierdurch kann erreicht werden, dass die gleiche Strömungsgeschwindigkeit über die gesamte Breite des Reaktors herrscht, wodurch für sämtliche zuströmende Flüssigkeit die gleiche Verweildauer im Reaktionsraum gegeben ist und somit ein gleiches Maß an Reaktion stattfinden kann. Insbesondere wird über die Vorkammer auch erreicht, dass die Strömung des Zulaufs von einem ersten Strömungsquerschnitt auf den Strömungsquerschnitt den Reaktionsraums angepasst wird.

Darüber hinaus kann durch die gleichmäßige Umsetzung, sofern die Abtrennung von Phosphat oder auch anderen Stoffen in Salzform erzielt werden soll, ein gleichmäßiges Kristallwachstum ermöglicht werden und die dadurch entstehende Verteilung an Kristallgrößen konzentriert sich auf enges Größenspektrum, so dass ein Aufwand der nachfolgenden Abtrennung der Kristalle über verschiedene herkömmliche Methoden, wie Zentrifugieren, Sedimentation und ähnliches, minimiert werden kann. Insbesondere können derartige Kristalle von möglichst hoher homogener Kristallgröße besonders einfach einer Weiterverarbeitung beispielsweise zu Düngemitteln unterzogen werden, sofern es sich hierbei um Phosphatkristalle handelt. Darüber hinaus besteht in einem gleichmäßigen Kristallwachstum der Vorteil, dass die durch die elektrochemische Reaktion gebildeten Kristalle gleichmäßig mit einer definierten Strömungskraft ausgetragen werden können.

Besonders bevorzugt ist es dabei, wenn die Einbauten aus einer oder mehreren Schottwänden bestehen. Die Einbauten füllen in vertikaler Einbaulage die gesamte Vorkammer aus, so dass alle Flüssigkeit um die Einbauten herumgeleitet werden muss.

Dabei ist es ebenfalls möglich, neben einer entsprechenden Vorkammer zur Strömungsregulierung zwischen Zulauf und Reaktionskammer eine entsprechende Nachkammer vorzusehen, mit der die Strömung zwischen Ablauf und Reaktionskammer ebenfalls reguliert wird, um so ein gleichmäßiges Abströmen der Flüssigkeit zu erreichen, trotz Veränderung des Strömungsquerschnitts von der Reaktionskammer zum Ablauf. Besonders bevorzugt weist auch die Nachkammer Einbauten, bevorzugt in Form von Schottwänden auf.

Dabei kann es insbesondere vorgesehen sein, dass der Zulauf und/oder der Ablauf einen kreisförmigen Strömungsquerschnitt aufweisen und der Reaktionsraum einen rechteckigen Strömungsquerschnitt. Insbesondere kann vorgesehen sein, dass der Strömungsquerschnitt des Reaktionsraums sehr viel breiter als hoch ist. Hierunter soll vorzugsweise ein Verhältnis von wenigstens 1:50, weiter vorzugsweise von wenigstens 1:70 und weiter vorzugsweise von wenigstens 1:100 verstanden werden. Darüber hinaus kann auch das Verhältnis von Höhe zu Länge des Reaktors, wobei unter die Länge die Erstreckung des Reaktors in Strömungsrichtung der Flüssigkeit verstanden werden soll, von wenigstens 1:50, weiter insbesondere von wenigstens 1:70, weiter wenigstens von 1:100 und weiter vorzugsweise von wenigstens 1:150 verstanden werden. Dabei ist es wichtig, dass die Strömung sich möglichst bereits bei Eintritt in den Reaktionsraum über die gesamte Reaktorbreite verteilt, um bereits bei Eintritt in den Reaktionsraum über die gesamten Elektroden, die den Reaktionsraum zwischen sich einschließen, eine Umsetzung und Reaktion bereitstellen zu können.

Dabei kann es insbesondere vorgesehen sein, dass die Einbauten wenigstens breiter als die Breite des Reaktionsraums sind. Insbesondere ragen die Einbauten um mindestens eine Länge C auf jeder Seite über die Breite der Reaktionsraums hinaus, wobei die Länge C mindestens der Breite D des Strömungswegs zwischen den Einbauten und der Wandung der Vorkammer bzw. Nachkammer, die dem Reaktionsraum zugewandt ist, entspricht. Vorzugsweise ist die Länge C jedoch größer, vorzugsweise 1,5fach, insbesondere 2fach Länger als die Breite D.

Ferner ist bevorzugt, dass der Abstand zwischen den Einbauten und dem Reaktionsraum mindestens 1/10 der Breite des Reaktionsraums beträgt

Weiterhin besonders bevorzugt kann vorgesehen sein, dass wenigstens eine der beiden Elektroden, vorzugsweise die in Gebrauchsrichtung obere Elektrode, relativ zur unteren Elektrode bewegbar ist, um den Reaktionsraum bezüglich seiner Höhe konstant zu halten, wenn die mindestens eine Opferelektrode verbraucht wird. Bei Verzehr der mindestens einen Opferelektrode führt das dazu, dass bei Einbau der Elektroden in einem Gehäuse der Abstand zwischen der oberen Elektrode und dem oberen Gehäuseteil sich vergrößert, sofern der obere Gehäuseteil nicht mit der Bewegung der oberen Elektrode mit geführt wird. In diesem Fall kann vorzugsweise vorgesehen sein, zwischen der oberen Elektrode und dem oberen Gehäuse eine Abtrennung vorzusehen, die so gestaltet ist, dass sie verhindert, dass Flüssigkeit in den Bereich oberhalb der oberen Elektrode gelangt und sämtliche Flüssigkeit in den Reaktionsraum eingetragen wird und gleichzeitig so ausgebildet ist, dass die Trennwand dem Verzehr der Opferelektroden folgen kann und somit der Bewegung der bewegbaren Elektrode. Insbesondere kann hierzu eine Art flexible Flachmaterialbahn eingesetzt werden, die zunächst am Startzeitpunkt des Reaktors z.B. ziehhamonikaartig gefaltet ist und so bei Verzehr der Elektrode sich entsprechend entfaltet. Beispielsweise kann hier eine flexible Folie aus Gummi oder Kunststoff oder ein beschichtetes Textil, aber auch eine gelenkige Platte vorgesehen sein. Hierdurch wird die eintretende Flüssigkeit in jedem Fall in den Reaktionsraum geleitet. Die gebildeten Kristalle werden sicher ausgetragen und ein Verstopfen oder Verlegen des Reaktionsraums wird vermieden. Um eine Austauschbarkeit der Elektroden im Gehäuse zu verbessern, kann die Abdeckung an der Elektrode z.B. nur über ein aufgelegtes Gewicht befestigt sein.

Dabei ist es generell vorgesehen, sofern Elektroden aus magnesiumhaltigem Material hergestellt werden, dass es bei Umsetzung von Phosphor zu folgender Reaktion kommt:

Mg²⁺ + NH₄⁺ + PO₄³⁻ + 6H₂O → MgNH₄PO₄ - 6 H₂O,

wobei die Magnesiumionen an der Oberfläche einer Opferanode aus Magnesium freigesetzt werden. Die Elektroden führen hier zur elektrolytischen Rückgewinnung von Phosphor als auskristallisiertes Magnesium-Ammoniumphosphat (MAP) (Struvite) bei Mangel an Magnesium im Ausgangssubstrat.

Wird eine der beiden Elektroden oder beide Elektroden während der Reaktion verzehrt, ist es vorteilhaft, wenn wie beschrieben der Abstand zwischen den Elektroden stets gleich bleibt, und infolgedessen das elektrische Feld zwischen Anode und Kathode stets gleich bleibt und so optimale Umsetzungsraten erreicht werden können. Dabei ist es vorteilhaft, wenn keine der beiden Elektroden permanent als Kathode oder Anode genutzt wird, sondern stets in gewissen Intervallen eine Umpolung erfolgt. Ohne Umpolung kann es zu Ablagerungen auf der Kathode kommen. Durch die Umpolung werden diese Ablagerungen zusammen mit dem Verzehr der Anode abgelöst und können aus dem Reaktor mit dem Flüssigkeitsstrom ausgetragen werden. Sofern erfindungsgemäß nicht vorgesehen ist, dass beide Elektroden als Opferelektrode vorgesehen sind, ist es bevorzugt, dass die Kathode, die sich nicht verzehrt, aus Edelstahl oder einem anderen korrosionsfesten elektrisch leitenden Material hergestellt ist.
Es ist für die Prozessführung von besonderer Bedeutung, dass ein konstanter Abstand zwischen den Oberflächen von Anode und Kathode unabhängig vom Verzehr der jeweiligen Opferelektrode ist. Die Oberflächen, die den Reaktionsraum begrenzen, durch den die zu behandelnde Flüssigkeit fließt, sind vorzugsweise eben, wobei der Reaktionsraum vorzugsweise einen rechteckigen Querschnitt in Strömungsrichtung aufweist und darüber hinaus auch die Elektroden eine kubische Form bzw. in einer Draufsicht eine rechteckige Form aufweisen, die sich durch den Verzehr nicht wesentlich verändert. Durch die konstante Geometrie des Reaktionsraums wird das elektrische Feld auch während des Verzehrs der Elektroden konstant gehalten und es können definierte und hohe Umsetzungsraten bei minimalem Energieverbrauch erreicht werden.

Eine Nachführung der einen Elektrode zur anderen Elektrode kann beispielsweise mit Hilfe der Schwerkraft, einer oder mehreren Federn und/oder einem oder mehreren Aktuatoren erreicht werden. Wenn die Schwerkraft eingesetzt wird, um z. B. eine im Betriebszustand obere Elektrode einer unteren Elektrode nachzuführen, können hierzu neben der Schwerkraft oder Federn auch elektrische, pneumatische oder hydraulische Aktuatoren eingesetzt werden, wobei es bevorzugt ist, Abstandshalter vorzusehen, die den definierten Abstand vorgeben, wobei vorzugsweise zwei Abstandshalter in einem Abstand zueinander vorgesehen sind, um ein Verkanten der Elektroden zueinander zu verhindern.

Darüber hinaus ist es auch möglich, insbesondere wenn Aktuatoren zur Nachführung einer Elektrode vorgesehen sind, eine Abstandsregelung oder -steuerung für den Abstand zwischen den Elektroden vorzusehen, mit Sensoren, die als Teil eines Regelkreises den Verzehr bzw. die verbliebene Dicke einer oder beider Elektroden erfassen. Hierzu sind Sensoren am Markt bekannt.

Besonders bevorzugt ist es dabei, dass die Oberflächen der Elektroden, die den Reaktionsraum begrenzen, eben sind, wobei die Elektroden eine gewisse Dicke aufweisen müssen, sofern sie als Opferelektroden eingesetzt werden, so dass sich hieraus bei einer rechteckigen Fläche, die dem Reaktionsraum zugewandt ist, eine im Wesentlichen kubische Form im unverbrauchten Zustand für die Elektrode ergibt.

Insbesondere ist es vorteilhaft, wenn die Außenabmessungen (Länge und Breite des Gehäuses) des erfindungsgemäßen Reaktors mit den Abmessungen gängiger Transportsysteme, wie beispielsweise sogenannten Europaletten, übereinstimmen. Dann kann das Unterteil des Gehäuses als mehrfach verwendbarer Transportbehälter für Anoden verwandt und in bestehende Logistikketten kostenoptimal transportiert werden.

Des Weiteren ist es möglich, um den im Reaktor ablaufenden Prozess und den Verzehr der Opferelektroden erfassen zu können, Mittel zur Erfassung der Position der Elektroden vorzusehen. Dabei kann es sich beispielsweise um Positionssensoren in beliebiger Bauart handeln. Diese können vorzugsweise bewegbar an dem Gehäuse des Reaktors oder an der Elektrode befestigt sein. Damit kann der Verzehr der Elektroden auf einfache Weise und sehr zuverlässig überwacht werden.

Schließlich sind auch Mittel zur Erfassung des elektrischen Stroms, der zwischen den Elektroden fließt, und/oder der elektrischen Spannung, die zwischen den Elektroden anliegt, vorgesehen. Dadurch lässt sich der Prozess, der in dem Reaktor abläuft, einfach und zuverlässig überwachen. Eventuelle Störungen des Prozesses führen zur Änderung des elektrischen Stroms und/oder der elektrischen Spannung und können somit einfach detektiert werden.

Besonders bevorzugt besteht die Opferelektrode, vorzugsweise jedoch auch beide Elektroden, aus einem magnesiumhaltigen Werkstoff. Dabei kann auch mehr oder weniger reines Magnesium als Elektrodenwerkstoff vorgesehen sein. Sofern nur eine Elektrode als Opferelektrode vorgesehen ist, kann die zweite Elektrode aus Edelstahl hergestellt sein, da dieser Werkstoff elektrisch leitend ist und von der zu behandelnden Flüssigkeit in dem Reaktor nicht angegriffen wird.

Weitere Vorteile und vorteilhafte Ausgestaltungen der Erfindung sind in der nachfolgenden Zeichnung dargestellt.

Dabei zeigen:
- Figur 1: einen erfindungsgemäßen Reaktor im Schnitt und
- Figur 2: einen erfindungsgemäßen Reaktor in geschnittener Darstellung in einer Ansicht von oben.

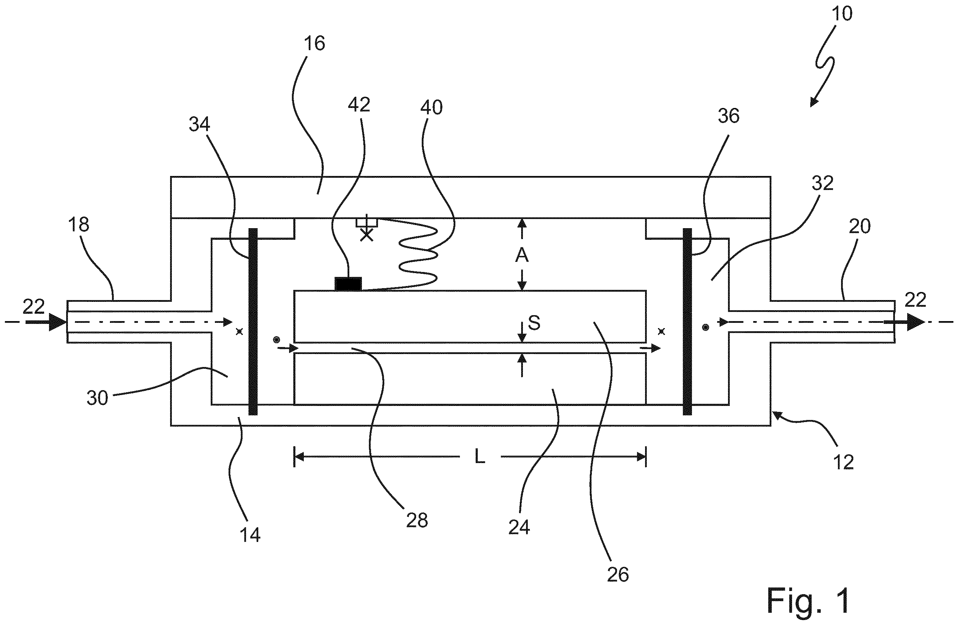

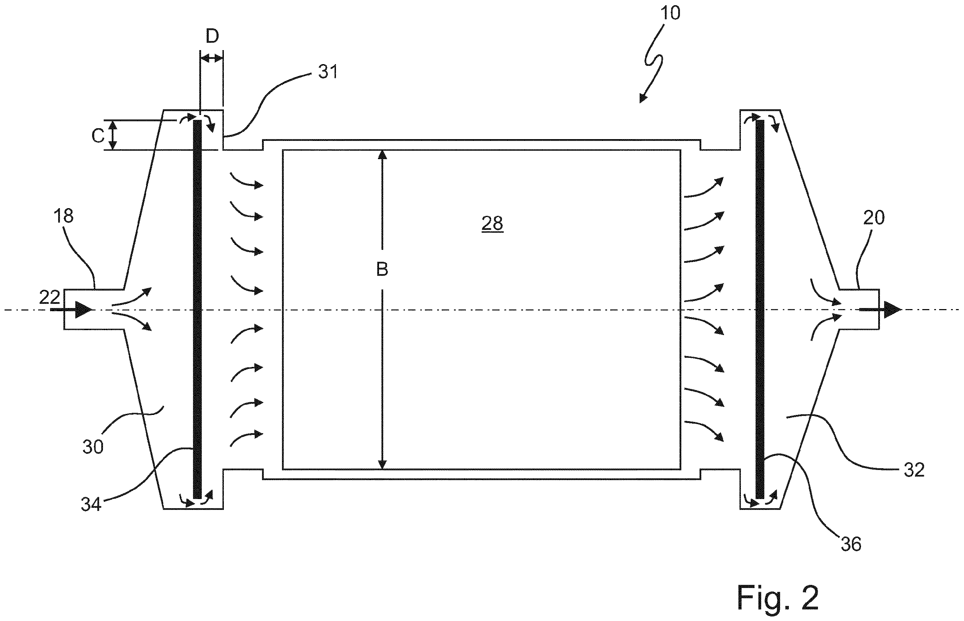

Figur 1 zeigt einen Reaktor 10 mit einem Gehäuse 12 umfassend ein Gehäuseunterteil 14 sowie ein Gehäuseoberteil 16. Der Reaktor weist des Weiteren einen Zulauf 18 sowie einen Ablauf 20 auf. Die Strömungsrichtung ist mit einem Pfeil 22 gekennzeichnet. In dem Gehäuse, das durch den Gehäuseoberteil 16, der hier als Deckel ausgebildet ist, verschlossen ist, sind zwei Elektroden 24 und 26 angeordnet, die beide als Opferelektroden ausgebildet sind und abwechselnd für gewisse Zeitintervalle als Anode und als Kathode dienen. Beide Elektroden 24 und 26 bestehen aus einem magnesiumhaltigen Werkstoff und werden im Zuge der Reaktion verzehrt, wenn Phosphor mit dem Phosphat aus der Flüssigkeit zu MAP umgesetzt wird. Zwischen den beiden Elektroden 24 und 26 ist ein Reaktionsraum 28 vorgesehen, der spaltförmig ausgebildet ist, wobei die Länge L des Reaktionsraums sehr viel länger ist als die Höhe des Spaltes S. Insbesondere ist die Spalthöhe S auch sehr viel kleiner als die Breite B der Elektroden, wie Figur 2 entnommen werden kann. Hierbei sind insbesondere ein Höhe/Längenverhältnis von 1:150 und ein Höhe/Breitenverhältnis von mindestens 1:100 vorgesehen. Die Elektrode 26 ist dabei im Gehäuse bewegbar und kann der Elektrode 24 nachgeführt werden, so dass die Spalthöhe S stets konstant bleibt, auch wenn die Elektroden 24 und 26 verzehrt werden.

Um die Flüssigkeitsströmung im Reaktionsraum 28 zu vergleichmäßigen, sind eine Vorkammer 30 sowie eine Nachkammer 32 vorgesehen, in der jeweils Einbauten 34 bzw. 36 vorgesehen sind. Bei diesen Einbauten handelt es sich um Schott- oder Trennwände, die dazu dienen, die in den Reaktor 10 eintretende Flüssigkeit ausgehend vom Zulauf 18 in einer Ebene senkrecht zur Zeichnungsebene in Figur 1 umzulenken, so dass die Flüssigkeit um die Trennwände 34 und 36 herumströmen muss. Im Ablaufbereich ist in gleicher Weise eine Nachkammer 32 vorgesehen, in der die Flüssigkeit wiederum so umgelenkt wird, dass sie in den Ablauf 20 strömungstechnisch besonders gut eintritt. Auf diese Weise soll erreicht werden, dass die Strömung im gesamten Reaktionsraum 28 möglichst gleichmäßig ist und eintretendes Fluid in etwa die gleiche Zeit im Reaktionsraum verbleibt.

Eine Überführung von einem kreisförmigen Strömungsquerschnitt, wie ihn der Zulauf 18 aufweist, in einen flachen Strömungsquerschnitt, wie ihn der Reaktionsraum besitzt, und dann wieder in einen kreisförmigen Strömungsquerschnitt des Ablaufs wird verbessert.

Darüber hinaus ist in Figur 1 an der oberen Elektrode 26 eine Abdeckung 40 vorgesehen, die fest mit dem Gehäusedeckel 16 verbunden sein kann und beispielsweise mittels eines Gewichts 42 auf der oberen Elektrode 26 festgelegt ist. Wird nun die obere Elektrode zur Nachführung aufgrund des Verzehrs bewegt, wird der Spalt, der in der Figur 1 mit dem Bezugszeichen a versehen ist, größer. Es nimmt somit die Gefahr zu, dass Flüssigkeit über die Elektroden hinwegströmt anstelle durch den Reaktionsraum 28. Mit Hilfe der Abdeckung 40 kann dies verhindert werden, wobei es sich bei der Abdeckung 40 insbesondere um eine flexible Folie handeln kann, so dass eine Nachführung der Elektrode 26 unproblematisch möglich ist.

Figur 2 zeigt nun eine geschnittene Darstellung des Reaktors 10 in einer Draufsicht. Hierbei ist die Schnittebene durch den Reaktionsspalt 28 gelegt. Flüssigkeit, die im Zulauf 22 eintritt, wird im Bereich der Vorkammer 30 nach rechts und links in der Zeichnungsebene umgelenkt und umströmt eine Trennwand 34. Diese Trennwand 34 ist in einem Abstand D vor der zum Reaktionsraum 28 hin gerichteten Wandung 31 der Vorkammer 30 angeordnet. Die Trennwand 34 steht beidseits über die Breite der Reaktionskammer 28 im Eintrittsquerschnitt derselben über mindestens ein Maß (eine Länge) C heraus, wobei die Breite C wenigstens der Breite D entspricht, so dass die Strömung so geführt wird, dass die Flüssigkeit in den Reaktionsraum mit einer gleichmäßigen und über den gesamten Reaktionsraum verteilten Strömungsgeometrie eintritt. Im Ausführungsbeispiel ist der Eintrittsquerschnitt geringfügig kleiner als die Breite B der Elektroden. So kann erreicht werden, , dass zu jedem Punkt im Zulaufbereich ein definierter Punkt im Eintrittsbereich zum Reaktionsraum 28 besteht und die Punkte über einen Teilströmungspfad verbunden werden können, wobei die Summe aller Strömungswiderstände des Teilströmungspfads stets gleich ist.

Tritt die Strömung mit einem möglichst gleichmäßigen Strömungsquerschnitt und möglichst gleichzeitig in den Reaktor ein, können über den Reaktor besonders gute Reaktionsraten erreicht werden und, wie bereits ausgeführt, Kristalle erzeugt werden, die eine möglichst gleichmäßige Kristallgröße aufweisen, was die spätere Abtrennung sowie Weiterverarbeitung erleichtert. Diese Maßnahme kann noch weiter verbessert werden, indem auch im Ablaufbereich 20 zwischen Reaktionsraum 28 und Ablauf 20 eine Nachkammer 32 zwischengeschaltet ist, in der ebenfalls eine Trennwand 36 vorgesehen ist, die durch die Flüssigkeit umströmt wird, um sie wiederum durch den Ablauf mit kreisförmigem Querschnitt zu leiten. Die gewählten Abstände D und C sind dabei vorzugsweise gleichermaßen zu wählen. Auf die vorstehende Weise können die Umsetzungsraten optimiert werden.

Die Trennwände 34, 36 sind hierbei so in der Vor- bzw. Nachkammer angeordnet, dass eine Umströmung in der Einbaulage nur beidseits daran vorbei erfolgen kann, nicht jedoch ober- oder unterhalb derselben hindurch.

## Patentansprüche

1. Elektrolytischer Reaktor, insbesondere zum Abtrennen von Phosphat aus phosphathaltigen Flüssigkeiten und Rückgewinnung von Phosphatsalzen, umfassend ein Gehäuse (12), einen Zulauf (18) sowie einen Ablauf (20) für die Flüssigkeit und zwei Elektroden (24,26) unterschiedlicher Polarität, die zwischen sich einen Reaktionsraum (28) einschließen, wobei wenigstens eine der beiden Elektroden (24,26) eine Opferelektrode ist, **dadurch gekennzeichnet, dass** zwischen Zulauf (18) und Reaktionsraum (28) eine Vorkammer (30) angeordnet ist, in der Einbauten (34) derart angeordnet sind, dass der Zulaufstrom durch die Einbauten (34) in zwei Teilströme aufgeteilt und um die Einbauten (34) herumgelenkt wird.

2. Reaktor nach Anspruch 1, **dadurch gekennzeichnet, dass** zwischen Reaktionsraum (28) und Ablauf (20) eine Nachkammer (32) angeordnet ist, in der Einbauten (36) derart angeordnet sind, dass der Ablaufstrom durch die Einbauten (36) in zwei Teilströme aufgeteilt und um die Einbauten (36) herumgelenkt wird.

3. Reaktor nach Anspruch 1 oder 2, **dadurch gekennzeichnet, dass** die Einbauten (34,36) aus einer oder mehreren Schottwänden bestehen.

4. Reaktor nach einem oder mehreren der vorangehenden Ansprüche, **dadurch gekennzeichnet, dass** der Zulauf (18)und/oder der Ablauf (20) einen kreisförmigen Strömungsquerschnitt aufweisen und der Reaktionsraum (28) einen rechteckigen Strömungsquerschnitt.

5. Reaktor nach einem oder mehreren der vorangehenden Ansprüche, **dadurch gekennzeichnet, dass** der Abstand zwischen den Einbauten (34,36) und dem Reaktionsraum (28) mindestens 1/10 der Breite (3) des Reaktionsraums (28) beträgt.

6. Reaktor nach einem oder mehreren der vorangehenden Ansprüche, **dadurch gekennzeichnet, dass** die Einbauten (34,36) beidseitig um mindestens die Länge C breiter sind, als ein Eintrittsquerschnitt des Reaktionsraums (28) .

7. Reaktor nach einem oder mehreren der vorangehenden Ansprüche, **dadurch gekennzeichnet, dass** der Strömungsquerschnitt des Reaktionsraums (28) sehr viel breiter als hoch ist, insbesondere das Höhe-Verhältnis zu Breite mindestens 1:50, vorzugsweise mindestens 1:70 und vorzugsweise mindestens 1:100 beträgt.

8. Reaktor nach einem der vorangehenden Ansprüche, **dadurch gekennzeichnet, dass** der Reaktionsraum (28) einen rechteckigen Querschnitt in Strömungsrichtung besitzt und über den gesamten Reaktionsraum (28) einen konstanten Strömungsquerschnitt aufweist.

9. Reaktor nach einem oder mehreren der vorangehenden Ansprüche, **dadurch gekennzeichnet, dass** die im Betriebszustand obere Elektrode (26) bewegbar ist und der unteren Elektrode (24) zur Erhaltung einer konstanten Höhe (S) des Reaktionsraums (28) nachgeführt werden kann.

10. Reaktor nach einem oder mehreren der vorangehenden Ansprüche, **dadurch gekennzeichnet, dass** zwischen dem Gehäuse (12), vorzugsweise einer im Betriebszustand oberen Gehäusehälfte (16) und der im Betriebszustand oberen Elektrode (26) eine Abdeckung (40) vorgesehen ist, die den Eintritt von Flüssigkeit in diesen Bereich verhindert.

11. Reaktor nach Anspruch 10, **dadurch gekennzeichnet, dass** die Abdeckung aus einem flexiblen Material besteht und so angeordnet ist, dass eine Bewegung der oberen Elektrode (26) durch eine Bewegung derselben ausgeglichen werden kann.

## Claims

1. Electrolytic reactor, in particular for separating phosphate from phosphate-containing liquids and recovering phosphate salts, comprising a housing (12), an inlet (18) and an outlet (20) for the liquid and two electrodes (24, 26) of different polarity which enclose a reactor chamber (28) between them, whereby at least one of the two electrodes (24, 26) is a sacrificial electrode, **characterized in that** between the inlet (18) and the reaction chamber (28) a pre-chamber (30) is provided in which inserts (34) are arranged such that the inlet stream is divided by the inserts (34) into two partial streams and directed around the inserts (34).

2. Reactor according to Claim 1, **characterized in that** between the reaction chamber (28) and the outlet (20) an after-chamber (32) is provided in which inserts (36) are arranged such that the outlet stream is divided into two partial streams by the inserts (38) and directed around the inserts (36).

3. Reactor according to Claims 1 or 2, **characterized in that** the inserts (34, 36) consist of one or more bulkheads.

4. Reactor according to one or more of the preceding claims, **characterized in that** the inlet (18) and/or the outlet (20) have a circular stream cross-section and the reaction chamber (28) has a rectangular stream cross-section.

5. Reactor according to one or more of the preceding claims, **characterized in that** the distance between the inserts (34, 36) and the reaction chamber (28) is at least 1/10 of the width (3) of the reaction chamber (28).

6. Reactor according to one or more of the preceding claims, **characterized in that** die inserts (34, 36) on both sides are wider by at least the length C than an entry cross-section of the reaction chamber (28).

7. Reactor according to one or more of the preceding claims, **characterized in that** the stream cross-section of the reaction chamber (28) is much wider than it is high, in particular that the height to width ratio is at least 1:50, preferably at least 1:70 and more preferably at least 1:100.

8. Reactor according to one or more of the preceding claims, **characterized in that** the reaction chamber (28) has a rectangular cross-section in flow direction and a constant stream cross-section throughout the entire reaction chamber (28).

9. Reactor according to one or more of the preceding claims, **characterized in that** the electrode (26) which is on top during operation is movable and that the bottom electrode (24) can be tracked to maintain a constant height (S) of the reaction chamber (28).

10. Reactor according to one or more of the preceding claims, **characterized in that** between the housing (12), preferably between a housing half (16) in the operating state, and the electrode (26) which is at the top in the operating state, a covering (40) is provided which prevents liquid from entering that region.

11. Reactor according to Claim 10, **characterized in that** the covering consists of a flexible material and is arranged such that a movement of the top electrode (26) can be adjusted by a movement thereof.

## Revendications

1. Réacteur électrolytique, en particulier pour séparer du phosphate de liquides contenant du phosphate et récupérer des sels de phosphate, comprenant un boîtier (12), une entrée (18) et une sortie (20) pour le liquide et deux électrodes (24, 26) de polarité différente, qui incluent un espace de réaction (28) entre celles-ci, dans lequel au moins l'une des deux électrodes (24, 26) est une électrode sacrificielle, **caractérisée en ce qu'**une antichambre (30) est agencée entre l'entrée (18) et l'espace de réaction (28), où sont agencés des obstacles (34), et **en ce que** le flux d'entrée à travers les composants internes (34) est divisé en deux flux partiels et dévié autour des obstacles (34).

2. Réacteur selon la revendication 1, **caractérisé en ce qu'**une chambre postérieure (32) est agencée entre l'espace de réaction (28) et la sortie (20), dans laquelle des éléments internes (36) sont agencés, et **en ce que** le flux de sortie est divisé par les composants internes (36) en deux flux partiels et dévié autour des obstacles (36).

3. Réacteur selon la revendication 1 ou 2, **caractérisé en ce que** les obstacles (34, 36) consistent en une ou plusieurs cloisons.

4. Réacteur selon une ou plusieurs des revendications précédentes, **caractérisé en ce que** l'entrée (18) et/ou la sortie (20) présente(nt) une section transversale d'écoulement de forme circulaire, et l'espace de réaction (28) présente une section transversale d'écoulement de forme rectangulaire.

5. Réacteur selon une ou plusieurs des revendications précédentes, **caractérisé en ce que** la distance entre les obstacles (34, 36) et l'espace de réaction (28) est égale à au moins 1/10 de la largeur (3) de l'espace de réaction (28) .

6. Réacteur selon une ou plusieurs des revendications précédentes, **caractérisé en ce que** les obstacles (34, 36) des deux côtés d'au moins la longueur C sont plus larges qu'une section transversale d'entrée de l'espace de réaction (28).

7. Réacteur selon une ou plusieurs des revendications précédentes, **caractérisé en ce que** la section transversale d'écoulement de l'espace de réaction (28) est beaucoup plus large que haute, en particulier le rapport hauteur/largeur est d'au moins 1:50, de préférence d'au moins 1:70 et de préférence d'au moins 1:100.

8. Réacteur selon l'une quelconque des revendications précédentes, **caractérisé en ce que** l'espace de réaction (28) présente une section transversale rectangulaire dans la direction d'écoulement et une section transversale d'écoulement constante sur la totalité de l'espace de réaction (28).

9. Réacteur selon une ou plusieurs des revendications précédentes, **caractérisé en ce que** l'électrode supérieure (26) peut être déplacée dans l'état de fonctionnement et l'électrode inférieure (24) peut être suivie pour maintenir une hauteur constante (S) de l'espace de réaction (28).

10. Réacteur selon une ou plusieurs des revendications précédentes, **caractérisé en ce qu'**un couvercle (40) est prévu entre le boîtier (12), de préférence une moitié supérieure du boîtier (16) dans l'état de fonctionnement, et l'électrode supérieure (26) dans l'état de fonctionnement, qui empêche l'entrée de liquide dans cette zone.

11. Réacteur selon la revendication 10, **caractérisé en ce que** le couvercle est fabriqué dans un matériau flexible et est agencé de sorte que le mouvement de l'électrode supérieure (26) puisse être compensé par un mouvement de celui-ci.
